# FASCICULE DE BREVET EUROPEEN

(11) **EP 2 300 243 B1**
(45) Date de publication et mention de la délivrance du brevet: **13.06.2012**
(21) Numéro de dépôt: 09797577.5
(22) Date de dépôt: 06.07.2009
(51) Int. Cl.: B60B 33/00

(54) **DISPOSITIF DE FIXTION D'UN ROULEMENT A UN AXE**
VORRICHTUNG ZUR BEFESTIGUNG EINES KUGELLAGERS AN EINER WELLE
DEVICE FOR ATTACHING A ROLLER BEARING TO A SHAFT

(30) Priorité: 18.07.2008 FR 0804108
(43) Date de publication de la demande: 30.03.2011
(73) Titulaire: CADDIE, 67301 Schiltigheim (FR)
(72) Inventeur: JOSEPH, Alice, F-67301 Schiltigheim Cedex (FR); LE MARCHAND, Alain, F-67116 Reichstett (FR)
(74) Mandataire: Boutin, Antoine
(86) Numéro de dépôt international: PCT/FR2009/051318
(87) Numéro de publication internationale: WO 2010/007293

(56) Documents cités:
- EP-A- 0 837 780
- WO-A-00/07833
- WO-A-98/42523
- DE-A1- 19 619 579
- US-B1- 6 588 059

## Description

### Domaine technique de l'invention

La présente invention se rapporte à un dispositif de fixation d'un roulement à un axe.

Ce dispositif de fixation est utilisé notamment pour fixer l'axe vertical d'une roulette pivotante de chariot.

### Etat de la technique

Le document WO 00/07833 décrit un dispositif de fixation pour une roulette pivotante de chariot, dans lequel un arbre vertical est relié à un roulement. L'arbre comprend un couvercle, un goujon supérieur permettant sa fixation à un châssis de chariot, et un goujon inférieur qui présente des dents d'encliquetage, permettant ainsi la fixation de l'arbre au roulement par encliquetage. Un inconvénient de ce dispositif est qu'en cas de détérioration de l'arbre, par exemple au niveau des dents d'encliquetage, l'arbre doit être séparé du châssis et entièrement remplacé. Ce remplacement est donc une opération fastidieuse et coûteuse.

Le document EP 0 837 780 décrit également un dispositif de fixation pour une roulette pivotante de chariot, dans lequel un arbre vertical est relié à un roulement. Différents types de moyens d'arrêt sont décrits, permettant la fixation de l'arbre au roulement par encliquetage. Dans certains modes de réalisation, les moyens d'arrêt consistent en un anneau fendu inséré dans une rainure de l'arbre. Lors du montage, l'installation de cet anneau sur l'arbre est une opération délicate qui peut être compliquée dès lors que la roue est préalablement montée sur la chape puisqu'elle vient empiéter sur la zone d'action pour effectuer le montage du moyen d'arrêt. Dans d'autres modes de réalisation, les moyens d'arrêt consistent en une rondelle élastique fixée à demeure contre le roulement grâce à un bourrelet d'appui. En cas de détérioration de la rondelle élastique, son remplacement est donc difficile. Le remplacement de la rondelle est d'autant plus difficile qu'elle se trouve du côté du roulement faisant face à la roue, et qu'il est donc nécessaire d'enlever la roue pour y avoir accès. De plus, le montage prévu dans ce document nécessite un jeu le long de l'arbre, qui introduit un débattement qui favorise les vibrations, engendre du bruit et conduit à de l'usure.

Le document US 6 588 059 décrit de même un dispositif de fixation pour une roulette pivotante de chariot dans lequel une plaque comporte une extension verticale creuse sur laquelle un roulement est monté par clipsage. L'ensemble est fixé par une pièce engagée par le dessous dans le trou central de la plaque dans lequel elle est maintenue par friction. Il s'agit d'un dispositif nécessitant l'emploi de plusieurs pièces au montage et imposant que la roue ne soit pas présente pour la fixation de la pièce de fixation dans l'extension verticale de la plaque.

### Résumé de l'invention

Un problème que la présente invention propose de résoudre est de fournir un dispositif de fixation qui ne présente pas au moins certains des inconvénients précités de l'art antérieur. En particulier, un but de l'invention est de fournir un dispositif de fixation dont le montage est facile. Un autre but de l'invention est de fournir un dispositif de fixation dans lequel le remplacement des moyens de retenue, en cas de détérioration, est aisé et peu coûteux. Un autre but de l'invention est de limiter les vibrations, le bruit et les causes d'usure.

La solution proposée par l'invention est un dispositif de fixation comprenant un roulement présentant un orifice central, un arbre inséré dans l'orifice central, et des moyens de retenue sans jeu de l'arbre dans l'orifice central dudit roulement par encliquetage, caractérisé par le fait que les moyens de retenue sont constitués par une pièce de retenue comprenant au moins une dent extérieure d'encliquetage coopérant avec le roulement, un trou dans lequel est reçu l'arbre et une dent intérieure coopérant avec ledit arbre.

Grâce à ces caractéristiques, le montage est très facile et se réalise par un double encliquetage. En effet, il suffit d'une part de relier la pièce de retenue au roulement par encliquetage, et d'autre part de relier l'arbre à la pièce de retenue par encliquetage. Aucun outil n'est nécessaire.

En cas de d'usure des éléments fixés au moyen de ce dispositif comme par exemple une chape de roulette, une roue ou la pièce de retenue, il devient très facile de séparer le roulement de l'arbre. Il n'est pas nécessaire de séparer l'arbre d'un autre élément auquel il est fixé, par exemple le châssis d'un chariot.

De plus, selon l'invention, la pièce de retenue est reliée au roulement sans jeu et l'arbre est relié à la pièce de retenue sans jeu.

Cela limite les causes d'usure.

De préférence, la pièce de retenue comprend au moins une dent d'encliquetage extérieure coopérant avec le roulement, l'arbre étant agencé dans un trou ménagé dans la pièce de retenue, la pièce de retenue présentant au niveau dudit trou au moins une dent d'encliquetage intérieure coopérant avec l'arbre.

Avantageusement, la pièce de retenue comprend une pluralité de dents d'encliquetage extérieures disposées circulairement, et une pluralité de dents d'encliquetage intérieures disposées circulairement chacune en regard d'une dent d'encliquetage extérieure.

Selon un mode de réalisation, la pièce de retenue présente une première surface de butée coopérant avec le roulement du côté opposé à ladite au moins une dent d'encliquetage extérieure, la distance entre la première surface de butée et ladite au moins une dent d'encliquetage extérieure étant égale à l'épaisseur du roulement.

De préférence, la pièce de retenue présente une deuxième surface de butée, l'arbre présentant une troisième surface de butée, l'arbre étant en appui sur la pièce de retenue au niveau des deuxième et troisième surfaces de butée, l'arbre présentant une rainure coopérant avec ladite au moins une dent d'encliquetage intérieure, la distance entre la ladite rainure et ladite troisième surface de butée étant égale à la distance entre ladite au moins une dent d'encliquetage intérieure et ladite deuxième surface de butée.

Avantageusement, le dispositif comprend une chape et une roue reliée à la chape, le roulement étant fixé à la chape de sorte que la chape et la roue peuvent pivoter par rapport à l'arbre, la pièce de retenue étant apte à être introduite ou retirée du roulement en cas de détérioration, du côté opposé à la roue.

Ainsi, pour insérer la pièce de retenue dans le roulement lors du montage, ou pour séparer la pièce de retenue du roulement lors de son remplacement, il n'est pas nécessaire de démonter la roue.

L'invention fournit aussi un chariot comprenant un châssis et au moins une roue pivotante, ladite roue pivotante étant reliée au châssis par l'intermédiaire d'un dispositif de fixation selon l'invention ci-dessus.

### Brève description des figures

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en coupe d'un dispositif de fixation selon un mode de réalisation de l'invention, et
- la figure 2 est une vue en perspective de la pièce de retenue du dispositif de fixation de la figure 1.

### Description détaillée d'un mode de réalisation de l'invention

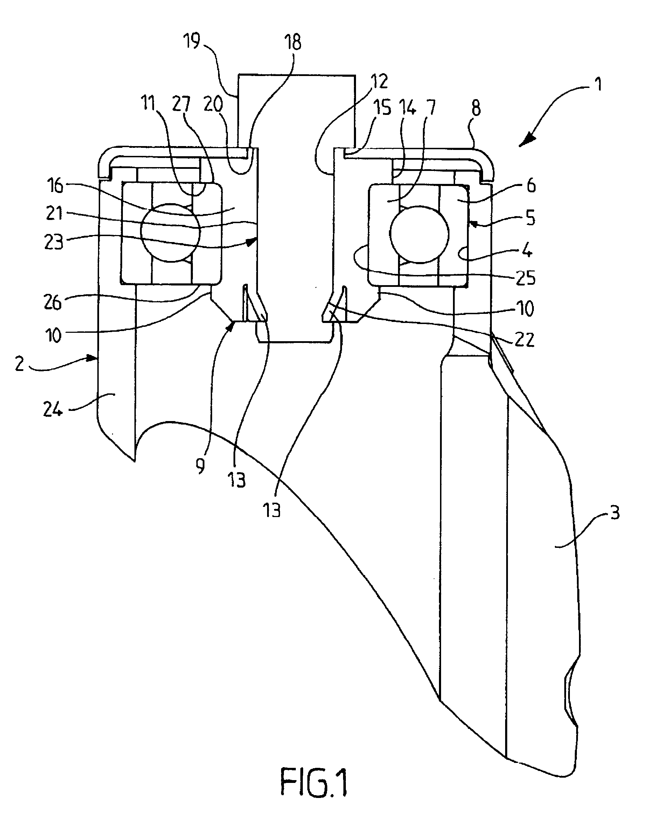

Le dispositif de fixation 1 de la figure 1 comprend une chape 2 qui présente une fourche 3 (partiellement représentée sur cette vue en coupe) à laquelle est reliée une roue. Le dispositif de fixation 1 comprend également un arbre 23, relié à la chape 2 d'une manière qui sera décrite ci-dessous, permettant le pivotement de la chape 2 par rapport à l'arbre 23. L'arbre 23 présente une tête 19 qui peut être fixée, par exemple par soudage, à un autre élément, par exemple au châssis d'un chariot.

Ainsi, le dispositif de fixation 1 permet de relier une roue au châssis d'un chariot, en permettant à la roue de pivoter par rapport au chariot. Il peut s'agir d'un chariot de magasin, d'un lit d'hôpital ou de tout autre type de chariot.

Outre la fourche 3, la chape 2 présente une paroi 24 en forme de cylindre de révolution. Une gorge 4 annulaire est ménagée du côté intérieur de la paroi 24.

Un roulement à bille 5 est relié à la chape 2. Plus précisément, le roulement à bille 5 comprend d'une part une bague extérieure 6 qui est insérée dans la gorge 4 et est solidaire en rotation de la chape 2, et d'autre part une bague intérieure 7 qui peut tourner par rapport à la bague extérieure 6 et donc par rapport à la chape 2. Un tel montage peut être réalisé par exemple par surmoulage ou montage à la presse.

La bague intérieure 7 présente un orifice central 25, dans lequel sont insérés une pièce de retenue 9 et l'arbre 23.

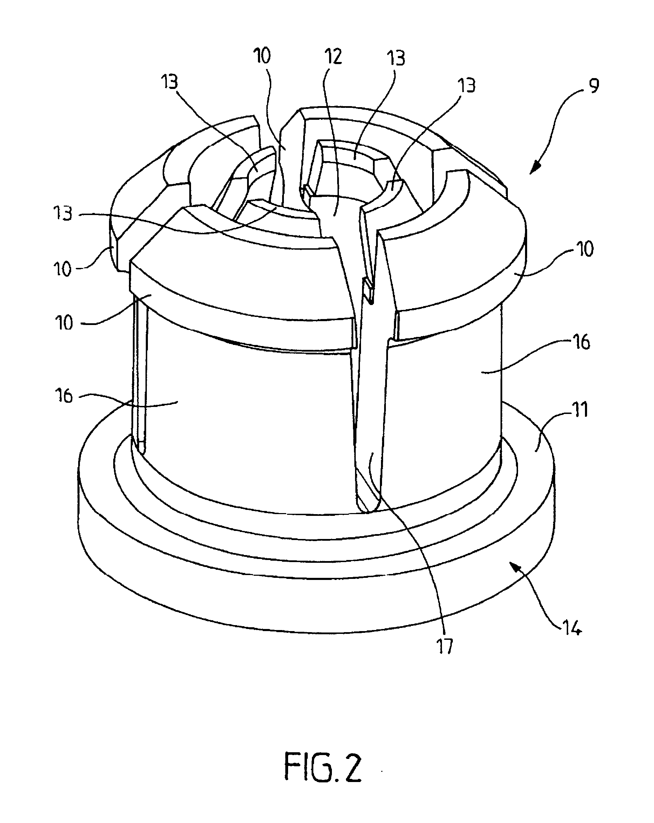

La pièce de retenue 9 est représentée en perspective sur la figure 2, dans un sens inversé par rapport à la figure 1. Elle a globalement la forme d'une douille. La pièce de retenue 9 présente un anneau 14, et quatre pattes 16 qui s'étendent vers le bas à partir de l'anneau 14, délimitant entre elles un trou 12 central. Les pattes 16 sont disposées en cercle et sont séparées les unes des autres par des fentes 17.

Du côté opposé à l'anneau 14, chaque patte 16 présente une dent d'encliquetage extérieure 10 et une dent d'encliquetage intérieure 13.

Les dents d'encliquetage extérieures 10 permettent de fixer la pièce de retenue 9 au roulement 5 par encliquetage. Lors de l'insertion de la pièce de retenue 9 dans l'orifice central 25, la forme biseautée des dents 10 et les fentes 17 permettent une déformation élastique des pattes 16. Après insertion, la pièce de retenue 9 est reliée au roulement 5 de la manière représentée sur la figure 1 : Les dents 10 prennent appui sur une face inférieure 26 de la bague intérieure 7, et l'anneau 14 présente une surface de butée 11 en appui contre une face supérieure 27 de la bague intérieure 7. La distance entre les dents 10 et l'anneau 14 est égale à l'épaisseur du roulement 5, c'est-à-dire à la distance entre la face inférieure 26 et la face supérieure 27. La pièce de retenue 9 est donc fixée au roulement 5 par encliquetage sans jeu.

Les dents d'encliquetage intérieures 13 permettent de fixer l'arbre 23 à la pièce de retenue 9 par encliquetage. En effet, comme on peut le voir sur la figure 1, l'arbre 23 présente une tige 21 qui s'étend vers le bas à partir de la tête 19, dans le trou 12 central de la pièce de retenue 9. La tige 21 présente, près de son extrémité opposée à la tête 19, une rainure 22 dans laquelle s'insèrent les dents 13. Lors du montage, les dents 13 s'écartent pour laisser passer l'extrémité de la tige 21, puis pénètrent dans la rainure 22. Dans l'état assemblé représenté sur la figure 1, une surface de butée 20 de la tête 19 repose sur la surface de butée 18 d'un rebord 15 de la pièce de retenue 9, qui entoure le trou 12 sur la face de l'anneau 14 opposée aux pattes 16. La distance entre la rainure 22 et la surface de butée 20 est égale à la distance entre les dents 13 et la surface de butée 18. L'arbre est donc fixé à la pièce de retenue 9 par encliquetage sans jeu.

Le dispositif de fixation 1 comprend aussi un couvercle 8, qui ferme le haut de la chape 2 et protège ainsi le roulement 5. L'épaisseur du couvercle 8 est égale à la hauteur du rebord 15, ce qui permet de coincer le couvercle 8 entre la tête 19 et l'anneau 14.

En fonctionnement, l'arbre 23, la pièce de retenue 9, le couvercle 8 et la bague intérieure 7 du roulement 5 sont solidaires en rotation les uns des autres. La bague extérieure 6, la chape 2 et la roue sont solidaires en rotation les uns des autres.

Lors du montage du dispositif de fixation 1, la pièce de retenue 9 est insérée dans l'orifice central 25 du roulement 5 et est fixée par encliquetage. Ensuite, le couvercle 8 est positionné. Enfin, l'ensemble formé par la roue, la chape 2, le roulement 5, la pièce de retenue 9 et le couvercle 8 forme une roulette qui est déplacé de manière à faire pénétrer l'arbre 23 dans le trou 12 de la pièce de retenue 9, et à l'y fixer par encliquetage. On voit donc que le montage se fait très facilement, par un double encliquetage.

En cas de détérioration d'un des éléments de l'ensemble précité formant une roulette, il n'est pas nécessaire de démonter ou remplacer l'arbre 23 ou le couvercle 8. Il est possible de dés-encliqueter la pièce de retenue 9 de l'arbre 23 par une traction exercée sur l'ensemble précité par rapport à l'arbre 23. Il n'est donc pas nécessaire de démonter la roue de la chape 2.

## Revendications

1. Dispositif de fixation (1) comprenant un roulement (5) présentant un orifice central (25), un arbre (23) inséré dans l'orifice central, et des moyens de retenue sans jeu de l'arbre (23) dans l'orifice central (25) dudit roulement par encliquetage, **caractérisé par le fait que** les moyens de retenue sont constitués par une pièce de retenue (9) comprenant au moins une dent extérieure d'encliquetage (10) coopérant avec le roulement (5), un trou (12) dans lequel est reçu l'arbre (23) et une dent intérieure coopérant avec ledit arbre (23).

2. Dispositif de fixation selon la revendication 1, dans lequel la pièce de retenue comprend une pluralité de dents d'encliquetage extérieures (10) disposées circulairement, et une pluralité de dents d'encliquetage intérieures (13) disposées circulairement chacune en regard d'une dent d'encliquetage extérieure.

3. Dispositif de fixation selon l'une des revendications 1 et 2, dans lequel la pièce de retenue (9) présente une première surface de butée (11) coopérant avec le roulement (5) du côté opposé à ladite au moins une dent d'encliquetage extérieure (10), la distance entre la première surface de butée (11) et ladite au moins une dent d'encliquetage extérieure (10) étant égale à l'épaisseur du roulement.

4. Dispositif de fixation selon l'une des revendications 1 à 3, dans lequel la pièce de retenue (9) présente une deuxième surface de butée (18), l'arbre (23) présentant une troisième surface de butée (20), l'arbre (23) étant en appui sur la pièce de retenue (9) au niveau des deuxième et troisième surfaces de butée, l'arbre présentant une rainure (22) coopérant avec ladite au moins une dent d'encliquetage intérieure (13), la distance entre la ladite rainure (22) et ladite troisième surface de butée (20) étant égale à la distance entre ladite au moins une dent d'encliquetage intérieure (13) et ladite deuxième surface de butée (18).

5. Dispositif de fixation selon l'une des revendications précédentes, comprenant une chape (2) et une roue reliée à la chape, le roulement étant fixé à la chape de sorte que la chape et la roue peuvent pivoter par rapport à l'arbre, la pièce de retenue étant apte à être retirée du roulement, en cas de détérioration, du côté opposé à la roue.

6. Chariot comprenant un châssis et au moins une roue pivotante, ladite roue pivotante étant reliée au châssis par l'intermédiaire d'un dispositif de fixation (1) selon l'une des revendications précédentes.

## Claims

1. An attachment device (1) comprising a rolling bearing (5) having a central orifice (25), a shaft (23) inserted into the central orifice, and means without any play for retaining the shaft (23) in the central orifice (25) of said rolling bearing by ratcheting, **characterized by** the fact that the retaining means are formed by a retaining part (9) comprising at least one outer ratcheting tooth (10) cooperating with the rolling bearing (5), a hole (12) into which the shaft (23) is received and an inner tooth cooperating with said shaft (23).

2. The attachment device according to claim 1, wherein the retaining part comprises a plurality of outer ratcheting teeth (10) positioned circularly, and a plurality of inner ratcheting teeth (13) positioned circularly each facing an outer ratcheting tooth.

3. The attachment device according to one of claims 1 and 2, wherein the retaining part (9) has a first abutment surface (11) cooperating with the rolling bearing (5) on the side opposite to said at least one outer ratcheting tooth (10), the distance between the first abutment surface (11) and said at least one outer ratcheting tooth (10) being equal to the thickness of the rolling bearing.

4. The attachment device according to one of claims 1 to 3, wherein the retaining part (9) has a second abutment surface (18), the shaft (23) having a third abutment surface (20), the shaft (23) bearing upon the retaining part (9) at the second and third abutment surfaces, the shaft having a groove (22) cooperating with said at least one inner ratcheting tooth (13) the distance between said groove (22) and said third abutment surface (20) being equal to the distance between said at least one inner ratcheting tooth (13) and said second abutment surface (18).

5. The attachment device according to one of the preceding claims, comprising a yoke (2) and a wheel connected to the yoke, the rolling bearing being attached to the yoke so that the yoke and the wheel may pivot relatively to the shaft, the retaining part being capable of being removed from the rolling bearing, in the case of deterioration, from the opposite side to the wheel.

6. A carriage comprising a chassis and at least one pivoting wheel, said pivoting wheel being connected to the chassis via an attachment device (1) according to one of the preceding claims.

## Patentansprüche

1. Befestigungsvorrichtung (1), die ein Lager (5), das eine zentrale Öffnung (25) aufweist, eine in die zentrale Öffnung eingesetzte Welle (23) und Rückhaltemittel der Welle (23) ohne Spiel in der zentralen Öffnung (25) des Lagers durch Rasten umfasst, **dadurch gekennzeichnet, dass** die Rückhaltemittel von einem Rückhalteteil (9) gebildet werden, das mindestens einen äußeren Rastzahn (10) umfasst, der mit dem Lager (5) zusammenarbeitet, ein Loch (12), in dem die Welle (23) aufgenommen wird und einen inneren Zahn, der mit der Welle (23) zusammenarbeitet.

2. Befestigungsvorrichtung nach Anspruch 1, wobei das Rückhalteteil eine Vielzahl von kreisförmig angeordneten äußeren Rastzähnen (10) und eine Vielzahl von kreisförmig angeordneten inneren Rastzähnen (13) jeweils gegenüber einem äußeren Rastzahn umfasst.

3. Befestigungsvorrichtung nach einem der Ansprüche 1 und 2, wobei das Rückhalteteil (9) eine erste Anschlagfläche (11) aufweist, die mit dem Lager (5) auf der Seite zusammenarbeitet, die dem mindestens einen äußeren Rastzahn (10) gegenübersteht, wobei der Abstand zwischen der ersten Anschlagfläche (11) und dem mindestens einen äußeren Rastzahn (10) der Dicke des Lagers entspricht.

4. Befestigungsvorrichtung nach einem der Ansprüche 1 bis 3, wobei das Rückhalteteil (9) eine zweite Anschlagfläche (18) aufweist, wobei die Welle (23) eine dritte Anschlagfläche (20) aufweist, wobei sich die Welle (23) auf dem Rückhalteteil (9) auf Ebene der zweiten und dritten Anschlagfläche abstützt, wobei die Welle eine Rille (22) aufweist, die mit mindestens einem inneren Rastzahn (13) zusammenarbeitet, wobei der Abstand zwischen der Rille (22) und der dritten Anschlagfläche (20) dem Abstand zwischen dem mindestens einen inneren Rastzahn (13) und der zweiten Anschlagfläche (18) entspricht.

5. Befestigungsvorrichtung nach einem der vorangehenden Ansprüche, die einen Gabelbügel (2) und ein mit dem Gabelbügel verbundenes Rad umfasst, wobei das Lager derart am Gabelbügel befestigt ist, dass der Gabelbügel und das Rad im Verhältnis zur Welle schwenkbar sind, wobei das Rückhalteteil imstande ist, bei Beschädigung von der dem Rad gegenüberliegenden Seite vom Lager getrennt zu werden.

6. Wagen, der ein Gestell und mindestens ein schwenkendes Rad umfasst, wobei das schwenkende Rad mit dem Rahmen durch eine Befestigungsvorrichtung (1) nach einem der vorangehenden Ansprüche verbunden ist.
